# EUROPÄISCHE PATENTSCHRIFT

(11) **EP 4 184 019 B1**
(45) Veröffentlichungstag und Bekanntmachung des Hinweises auf die Patenterteilung: **08.01.2025**
(21) Anmeldenummer: 21209269.6
(22) Anmeldetag: 19.11.2021
(51) Int. Cl.: F16B 12/20, F16B 12/26

(54) **BESCHLAG UND VERBINDER FÜR BAUTEILE**
FITTING AND CONNECTOR FOR COMPONENTS
FERRURE ET CONNECTEUR POUR COMPOSANTS

(43) Veröffentlichungstag der Anmeldung: 24.05.2023
(73) Patentinhaber: Knapp GmbH, 3324 Euratsfeld (AT)
(72) Erfinder: KNAPP, Friedrich, 4362 Bad Kreuzen (AT)
(74) Vertreter: Weiser & Voith Patentanwälte Partnerschaft

(56) Entgegenhaltungen:
- DE-A1- 10 161 284
- DE-C2- 19 604 243
- US-A- 3 266 361
- US-A- 571 042

## Beschreibung

Die vorliegende Erfindung betrifft einen Beschlag für einen Bauteil, insbesondere Holzbauteil, der eine Nut mit in Längsrichtung der Nut kreisbogenförmig konkavem Nutgrund und kreissegmentförmigen Nutflanken hat, welcher Beschlag einen Abschnitt mit in Längsrichtung kreisbogenförmig konvexer Stirnseite und zwei parallelen Lateralseiten zum Eintauchen in die Nut hat, wobei jede Lateralseite mit zumindest einer konzentrisch zur Stirnseite kreisbogenförmigen, seitlich abstehenden Schneidkante versehen ist, mithilfe welcher der Beschlag in einer kreisbogenförmigen Bewegung in die Nut von deren einem Ende her eingeschoben werden kann, und wobei der Beschlag ferner dafür ausgebildet ist, an seiner dem genannten Abschnitt abgewandten Seite mit einem zweiten Beschlag lösbar oder unlösbar verbunden zu werden. Die Erfindung betrifft ferner einen Verbinder mit zwei solchen Beschlägen zum Verbinden zweier Bauteile.

Verbinder dieser Art sind beispielsweise aus der DE 196 04 243 C2 desselben Erfinders bekannt. Die Schneidkanten sichern den Beschlag in der Nut gegen ein Herausziehen quer zur Nutlängsrichtung. Aus der DE 10 2014 101 158 A1 sind ähnliche Verbinder bekannt, die für Bauteile mit Nuten mit kreisbogenförmigen Hinterschneidungen vorgesehen sind, für welche der jeweilige Beschlag nicht-selbstschneidende kreisbogenförmige Rippen zum Eingriff in die Hinterschneidungen hat. Zum Verankern des Beschlags am zugehörigen Bauteil wird der Beschlag in die Nut von deren Ende her in einer kreisbogenförmigen Bewegung eingeschoben und ist dann durch die Hinterschneidungen gegen ein Herausziehen aus dem Bauteil quer zur Nut gesichert.

Ein Nachteil der bekannten Verbinder ist, dass der Beschlag sich in der Nut in Nutlängsrichtung verschieben kann, wodurch schlimmstenfalls die Bauteile auseinanderfallen können. In der DE 10 2014 101 158 A1 wurde daher vorgeschlagen, im jeweiligen Bauteil zusätzlich eine die Nut querende Bohrung vorzusehen, die zur Aufnahme eines Exzenters oder einer Antriebswelle für einen Verriegelungshaken verwendet werden kann, der in den gegenüberliegenden Beschlag einhaken kann, um die Beschläge gegeneinander zu spannen. Gleichzeitig verhindert der in die Bohrung des Bauteils eingeschobene Exzenter ein Herausgleiten des Beschlags in Nutlängsrichtung. Diese Konstruktion ist jedoch mechanisch aufwendig und für einen Einsatz als kostengünstiger Massenartikel wenig geeignet.

Die Erfindung setzt sich zum Ziel, die Nachteile des genannten Standes der Technik zu überwinden und einen Beschlag bzw. Verbinder zu schaffen, der auf kostengünstige, einfache und sichere Weise eine dauerhafte und feste Verbindung der Bauteile ergibt.

Dieses Ziel wird in einem ersten Aspekt der Erfindung mit einem Beschlag der einleitend genannten Art erreicht, welcher sich dadurch auszeichnet, dass die Stirnseite mit zumindest einer in Längsrichtung kreisbogenförmig verlaufenden Schneidrippe versehen ist. Die erfindungsgemäße Schneidrippe an der Stirnseite (Außenumfangsseite) des Eintauchabschnitts schneidet sich beim Einsetzen des Beschlags in die Nut, beispielsweise beim Einschlagen mit einem Hammer, in den Nutgrund ein und fixiert so den Beschlag durch Reibungseingriff gegen ein Verrutschen in Nutlängsrichtung.

Die erfindungsgemäße/n Schneidrippe/n an der Stirnseite des Beschlags ist/sind besonders vorteilhaft im Zusammenwirken mit den kreisbogenförmigen seitlichen Schneidkanten: Die Schneidkanten sichern den Beschlag in der Nut gegen ein Herausziehen quer zur Nutlängsrichtung, und die auf der Stirnseite verlaufende/n Schneidrippe/n sichert bzw. sichern den Beschlag gegen Verrutschen in Nutlängsrichtung.

Erfindungsgemäß kann der zweite Beschlag, mit welchem der genannte Beschlag an seiner dem genannten Abschnitt abgewandten Seite lösbar oder unlösbar verbunden werden kann, entweder seinerseits mit einem zweiten Bauteil verbunden oder selbst der zweite Bauteil sein, sodass der genannte Beschlag dazu ausgebildet ist, auf kostengünstige, einfache und sichere Weise eine direkte oder über den zweiten Beschlag indirekte, dauerhafte und feste - lösbare oder unlösbare - Verbindung zu schaffen.

Bevorzugt hat die Schneidrippe dreieckförmigen Querschnitt und ist in Längsrichtung gesehen an ihren Enden gegenüber der Stirnseite abgeschrägt. Dadurch lässt sich die Schneidrippe besonders leicht in den Nutgrund eintreiben, insbesondere auch beim Einschlagen des Beschlags in einer kreisbogenförmigen Bewegung.

Besonders günstig ist es, wenn die Schneidrippe in Längsrichtung gesehen kürzer als die Stirnseite ist und mittig auf der Stirnseite liegt, was das Einsetzen des Beschlags zu Beginn der kreisbogenförmigen Eintreibbewegung in die Nut erleichtert.

In einer ersten bevorzugten Variante liegt die Schneidrippe quer zur Längsrichtung gesehen mittig auf der Stirnseite. In einer zweiten bevorzugten Variante kann die Stirnseite mit zwei parallelen, quer zur Längsrichtung gesehen symmetrisch außermittig liegenden Schneidrippen versehen sein. Beide Varianten ergeben eine symmetrische Kraftverteilung in der Nut.

Besonders günstig ist es, wenn die Schneidkanten jeweils einen Querschnitt in Form eines Sägezahns haben, dessen stirnseitenabgewandte Sägezahnseite normal zur jeweiligen Lateralseite liegt. Die genannten normalen Sägezahnseiten bilden so eine gute Abstützfläche gegenüber einem Herausziehen des Beschlags quer zur Nutlängsrichtung.

Darüber hinaus eignet sich diese Ausführungsform auch zum Einsetzen des Beschlages in eine Nut, deren Nutflanken jeweils nahe dem Nutgrund hinterschnitten sind. Die normal zu der jeweiligen Lateralseite des Beschlags verlaufende Sägezahnseite einer Schneidkante bildet so eine besonders gute Anlagefläche für den von der Hinterschneidung gebildeten Innenabsatz der Nutflanke, und die Sägezahnspitze schneidet in den Boden der Hinterschneidung ein.

Eine alternative bevorzugte Gestaltung der Schneidkanten für das Eintauchen in eine hinterschnittene Nut besteht darin, dass die Schneidkanten jeweils einen Querschnitt in Form eines Rechtecks mit seitlich angesetztem Dreieck haben. Der Rechteckteil der Schneidkante greift in die Hinterschneidung der Nutflanke ein, während der daran ansetzende, weiter vorstehende Dreieckteil der Schneidkante in den Boden der Hinterschneidung einschneidet.

Bei allen Ausführungsformen mit Schneidkanten zum seitlichen kreisbogenförmigen Einschneiden in eine hinterschnittene oder nicht-hinterschnittene Nut bewirkt die an der Stirnseite des Beschlags verlaufende Schneidrippe eine zusätzliche Verspannung der seitlichen Schneidkanten gegenüber den Nutflanken bzw. deren optionalen Hinterschneidungen.

Gemäß einer weiteren bevorzugten Ausführungsform der Erfindung ist der Beschlag auf seiner dem genannten Abschnitt abgewandten Seite mit zumindest einer auskragenden Lasche zum Einführen in eine Tasche eines anderen Beschlags ausgestattet. Alternativ ist der Beschlag auf seiner dem genannten Abschnitt abgewandten Seite mit zumindest einer schlitzförmigen Tasche zur gleitführenden Aufnahme einer vorkragenden Lasche eines anderen Beschlags ausgestattet. Dadurch können zwei Beschläge unter Ineinandergreifen der Laschen und Taschen gegen ein gegenseitiges Verrutschen in Nutlängsrichtung gesichert werden.

In einer weiteren bevorzugten Ausführungsform des Erfinders ist der Beschlag auf seiner dem genannten Abschnitt abgewandten Seite mit Rastmitteln zur Verrastung mit einem dazu komplementären anderen Beschlag ausgestattet. Die Rastmittel können insbesondere federnde Rasthaken für den Eingriff in eine hinterschnittene Ausnehmung des anderen Beschlags oder aber eine hinterschnittene Ausnehmung für den Eingriff federnder Rasthaken des anderen Beschlags sein. Dadurch können zwei Beschläge lösbar (oder auch dauerhaft) aneinander verrastet werden, um zwei Bauteile miteinander zu verbinden.

In der Ausführungsform mit hinterschnittener Ausnehmung für den Eingriff federnder Rasthaken kann in der Ausnehmung optional ein Steg für den Eintritt zwischen die beiden Rasthaken des anderen Beschlags vorgesehen sein. Dadurch wird in der zusammengesteckten Stellung der Beschläge, in welcher die Rasthaken des einen Beschlags in die hinterschnittene Ausnehmung des anderen Beschlags eingreifen, ein unbeabsichtigtes Herausgleiten der Rasthaken aus den Hinterschneidungen der Ausnehmung erschwert bzw. weitgehend verhindert.

In einem zweiten Aspekt schafft die Erfindung einen Verbinder mit zwei Beschlägen der hier vorgestellten Art, welche dafür ausgebildet sind, miteinander verschraubt, verhakt oder verrastet zu werden, um zwei Bauteile miteinander zu verbinden. Eine entsprechende komplementäre Ausbildung der beiden Beschläge, insbesondere an den ihren Eintauchabschnitten in die Bauteilnuten abgewandten Seiten, kann dabei beispielsweise wie in den Schriften DE 196 04 243 C2 oder DE 10 2014 101 158 A1 erfolgen.

Die Erfindung wird nachstehend anhand von in den beigeschlossenen Zeichnungen dargestellten Ausführungsformen näher erläutert. In den Zeichnungen zeigt:
Fig. 1 einen Verbinder der Erfindung, der sich aus zwei erfindungsgemäßen Beschlägen in jeweils unterschiedlicher Ausführungsform zusammensetzt, in einer Perspektivansicht im unverbundenen Zustand;
Fig. 2 einen beispielhaften Bauteil mit Nut zur Aufnahme eines erfindungsgemäßen Beschlags in einer Perspektivansicht;
Fig. 3 eine ausschnittsweise Schnittansicht durch zwei mit dem Verbinder von Fig. 1 verbundene Bauteile; und
Fig. 4 eine weitere Ausführungsform des Verbinders der Erfindung in einer Seitenansicht im verbundenen Zustand.

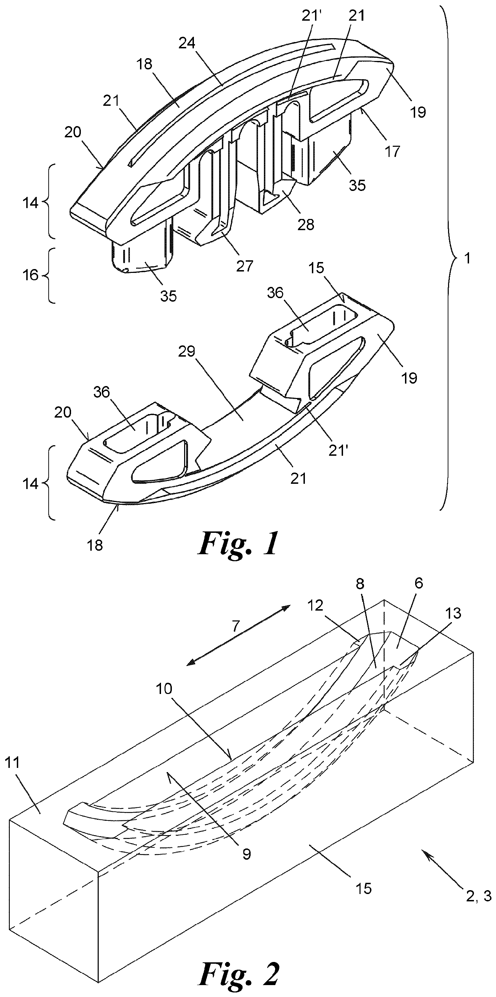

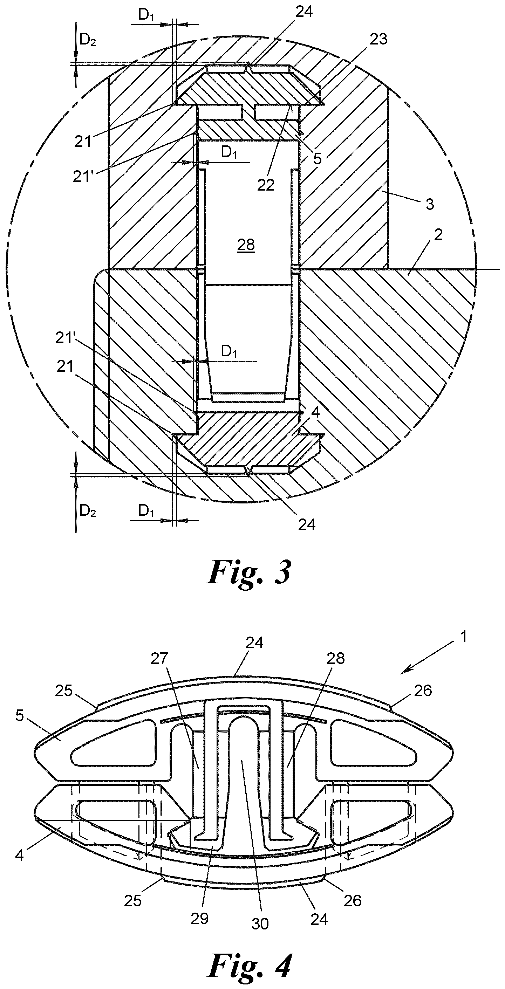

In den Fig. 1, 3 und 4 ist ein Verbinder 1 zum Verbinden zweier Bauteile 2, 3 (siehe Fig. 2, 3) gezeigt. Bei den Bauteilen 2, 3 kann es sich um jede beliebige Art von Bauteil aus jedem beliebigen Material handeln, sei es aus Holz, Metall, Kunststoff od.dgl. Der Verbinder 1 ist besonders zum Verbinden von Holzbauteilen 2, 3 gedacht, beispielsweise im Möbelbau oder Industrieholzbau. Je nach den Festigkeitsanforderungen kann der Verbinder 1 seinerseits aus beliebigen Materialien gefertigt sein, beispielsweise aus Holz, Kunststoff, Metall oder Kombinationen daraus. Speziell für kleinformatige Verbinder 1 im Möbelbau kann der Verbinder 1 zur Gänze aus Kunststoff gefertigt sein, bei höheren Festigkeitsanforderungen, z.B. für tragende Konstruktionen im Industrieholzbau, kann der Verbinder zur Gänze aus Metall gefertigt sein.

Der Verbinder 1 setzt sich im Wesentlichen aus einem ersten Beschlag 4 und einem zweiten Beschlag 5 zusammen. Der erste Beschlag 4 wird am ersten Bauteil 2 und der zweite Beschlag 5 am zweiten Bauteil 3 verankert. Durch miteinander Verbinden der beiden Beschläge 4, 5, z.B. durch miteinander Verschrauben, Verhaken, Verrasten, wie später noch ausführlicher beschrieben, werden die Bauteile 2, 3 fest - entweder dauerhaft oder lösbar - miteinander verbunden.

Zur Verankerung des ersten Beschlags 4 hat der erste Bauteil 2 eine Nut 6 mit einem in Längsrichtung 7 der Nut 6 kreisbogenförmig konkaven Nutgrund 8 und beidseitigen kreissegmentförmigen Nutflanken 9, 10, siehe Fig. 2. Die Nut 7 verläuft an der Oberseite 11 des Bauteils 2 in der Nutlängsrichtung 7 und hat in ihrer Mitte ihre größte Tiefe gemessen von der Oberseite 11 des Bauteils 2 zum Nutgrund 8. Die Nut 6 hat optional auf zumindest einer ihrer Nutflanken 9, 10, bevorzugt auf beiden Nutflanken 9, 10, jeweils eine kreisbogenförmige Hinterschneidung 12, 13.

Zur Verankerung des zweiten Beschlags 5 am zweiten Bauteil 3 kann im Wesentlichen dieselbe Konstruktion verwendet werden, d.h. der zweite Bauteil 3 (Fig. 3) ist mit einer gleichartigen Nut 6, optional mit kreisbogenförmigen Hinterschneidungen 12, 13, ausgestattet. Einer der Beschläge 4, 5 kann aber auch selbst ein Bauteil sein, z.B. ein Kleiderhaken, Verkleidungsteil, Beleuchtungskörper, Trag- oder Stützteil usw.

Jeder der Beschläge 4, 5 hat jeweils einen Abschnitt 14 zur Verankerung in der jeweiligen Nut 6. In der in Fig. 1 gezeigten Ausführungsform des ersten Beschlags 4 nimmt der Abschnitt 14 den gesamten Beschlag 4 ein, d.h. der Beschlag 4 ist in der im Bauteil 2 verankerten Stellung vollständig in die Nut 6 eingetaucht und schließt mit seiner Oberseite 15 bündig mit der Oberseite 11 des Bauteils 2 ab. In der in Fig. 1 gezeigten Ausführungsform des zweiten Beschlags 5 nimmt der in die Nut 7 eintauchende Abschnitt 14 des Beschlages 5 nur einen Teil des Beschlags 5 ein, sein anderer Teil 16 ragt von einer Anlagefläche 17 des in die Nut 7 eintauchenden Abschnitts 14, welche im im Bauteil 3 verankerten Zustand des Beschlags 5 bündig mit der Oberseite 11 des Bauteils 3 ist, vor. Der vom Eintauchabschnitt 14 vorragende Teil 16 des Beschlags 5 dient zum Eingriff in den anderen Beschlag 4, um die Beschläge 4, 5 miteinander zu verbinden, beispielsweise zu verschrauben, zu verhaken oder zu verrasten, wie später noch ausführlicher beschrieben wird.

Für den Eingriff in die jeweilige Nut 6 hat der Abschnitt 14 jedes Beschlags 4, 5 eine in Längsrichtung 7 der Nut 6 kreisbogenförmig konvexe Stirnseite 18, deren Krümmung komplementär zur Krümmung des Nutgrundes 8 ist, und zwei parallele Lateralseiten 19, 20, die an den Nutflanken 9, 10 zur Anlage kommen.

Auf seinen Lateralseiten 19, 20 hat jeder Beschlag 4, 5 jeweils eine zur Kreisbogenform seiner Stirnseite 18 konzentrische, seitlich abstehende Schneidkante 21. Mithilfe der Schneidkanten 21 kann der Beschlag 4, 5 in einer kreisbogenförmigen Bewegung in die jeweilige Nut 6 von deren einem Ende her eingeschoben werden, wobei die Schneidkanten 21 sowohl in die Hinterschneidungen 12, 13 eingreifen als auch mit ihren Spitzen in die Böden der Hinterschneidungen 12, 13, d.h. das Material des jeweiligen Bauteils 2, 3, einschneiden, siehe die Eindring- bzw. Einschneidtiefe D₁ der Schneidkanten 21 in die Bauteile 2, 3 in Fig. 3.

In dem in Fig. 3 gezeigten Beispiel hat jede Schneidkante 21 einen Querschnitt in Form eines Sägezahns, dessen der Stirnseite 18 abgewandte Sägezahnseite 22 normal zur jeweiligen Lateralseite 19, 20 liegt. Dadurch bildet die Sägezahnseite 22 eine Abstützfläche zur Anlage an dem von der jeweiligen Hinterschneidung 12, 13 gebildeten, nutgrundabgewandten Innenabsatz 23 der Nut 6. Diese Ausführungsform der Schneidkanten 21 eignet sich somit besonders für ein Zusammenwirken mit einer Nut 6 mit Hinterschneidungen 12, 13. Gleichzeitig ist diese Ausführungsform der Schneidkante 21 aber auch für nicht-hinterschnittene Nuten 6 geeignet, wenn die Schneidkanten 21 entsprechend weniger weit abstehen und ihr gesamter von den Lateralseiten 19, 20 abstehenden Sägezahnteil zum Einschneiden in die Nutflanken 9, 10 verwendet wird.

Speziell für hinterschnittene Nuten 6 können die Schneidkanten 21 auch einen anderen als den genannten Sägezahnquerschnitt haben, beispielsweise einen Querschnitt in Form eines Rechtecks mit seitlich angesetztem Dreieck. Der Rechteckabschnitt des Querschnitts bildet dann eine Rippe mit der Anlagefläche 22, die in die Hinterschneidung 12, 13 eingeführt werden kann, und das daran seitlich ansetzende Dreieck des Querschnitts bildet dann die Schneide der Schneidkante 21, welche mit der Eindringtiefe D₁ in den Boden der Hinterschneidung 12, 13 einschneidet.

Falls gewünscht, können die Lateralseiten 19, 20 der Beschläge 4, 5 auch noch mit weiteren, zu den Schneidkanten 21 konzentrisch kreisbogenförmigen Schneidkanten 21' zum Einschneiden in die Nutflanken 9, 10 versehen sein.

An der Stirnseite 18 ist jeder Beschlag 4, 5 mit (zumindest) einer in Nutlängsrichtung 7 verlaufenden, der Kreisbogenform der Stirnseite 18 folgenden Schneidrippe 24 versehen. Die Schneidrippe 24 hat beispielsweise einen dreieckförmigen Querschnitt, könnte aber auch jeden anderen, eine "Messerschneide" bildenden Querschnitt haben. An ihren in Längsrichtung 7 gesehen beiden Enden 25, 26 kann die Schneidrippe 24 gegenüber der Stirnseite 18 abgeschrägt sein (Fig. 4).

Die Schneidrippen 24 können über die gesamte Länge der jeweiligen Stirnseite 18 verlaufen oder, wie dargestellt, in Längsrichtung 7 gesehen kürzer als die jeweilige Stirnseite 18 sein und dann insbesondere mittig auf der Stirnseite 18 liegen. In dem in Fig. 4 gezeigten Beispiel erstreckt sich die Schneidrippe 24 des ersten Beschlages 4 mittig über etwa ein Drittel der gesamten Länge der Stirnseite 18, wogegen die Schneidrippe 24 des zweiten Beschlags 5 sich über etwa zwei Drittel der gesamten Länge der Stirnseite 18 erstreckt. Auch ist es möglich, mehr als eine Schneidrippe 24 auf der Stirnseite 18 vorzusehen, beispielsweise zwei parallele, quer zur Längsrichtung 7 gesehen symmetrisch-außermittig liegende Schneidrippen 24, z.B. jeweils eine Schneidrippe 24 nahe einem der Längsränder der Stirnseite 18.

Beim Einführen des Abschnitts 14 des jeweiligen Beschlags 4, 5 in die Nut 6 dringt die Schneidrippe 24 in das Material des jeweiligen Bauteils 2, 3 ein, siehe Eindringtiefe D₂ in Fig. 3. Das Einsetzen des jeweiligen Beschlags 4, 5 in die Nut 6 kann dabei z.B. mit Hammerschlägen unterstützt werden, um die Schneidrippen 24 - und auch die Schneidkanten 21, sofern vorhanden - in das Material der Bauteile 2, 3 einzutreiben. Die Abschrägungen an den Enden 25, 26 der Schneidrippe 24 erleichtern dabei das Eintreiben; gleichartige Abschrägungen können auch an den Schneidkanten 21 vorgesehen werden.

Die Schneidrippen 24 - ebenso wie die Schneidkanten 21, falls vorhanden - sichern den Beschlag 4, 5 in der Verankerungsstellung in der Nut 6 durch Reibeingriff gegen ein Verrutschen in Nutlängsrichtung 7. Darüber hinaus bewirken die Schneidrippen 24 bei einer Nut 6 mit Hinterschneidungen 12, 13 auch eine zusätzliche Verspannung der Anlageflächen 22 der Schneidkanten 21 gegen die Innenabsätze 23 der Hinterschneidungen 12, 13, wie aus Fig. 3 ersichtlich. Die Schneidrippen 24 beseitigen dabei auch jegliches allfällige Spiel, indem die Eindringtiefe D₂ entsprechend dem verfügbaren Einbauraum in der Nut 6 variiert.

Auch bei nicht-hinterschnittenen Nuten 6 unterstützen die Schneidrippen 24 bei der Verwendung von Schneidkanten 21 deren Verspannung in den von diesen geschnittenen Rillen im Material der Bauteile 2, 3.

Nachdem die Beschläge 4, 5 durch Einführen ihrer Abschnitte 14 in die Nuten 6 an den Bauteilen 2, 3 verankert worden sind, können die beiden Beschläge 4, 5 auf jede in der Technik bekannte Art miteinander lösbar oder unlösbar verbunden werden. Die Beschläge 4, 5 können beispielsweise miteinander verschraubt werden, z.B. wenn entsprechende Zugangsbohrungen durch die Bauteile 2, 3 zu Schraubverbindungen zwischen den Beschlägen 4, 5 eingearbeitet werden. Alternativ oder zusätzlich können die Beschläge 4, 5 durch Rasthaken, Gleitführungen, Bajonettverschlüsse usw. aneinander fixiert werden, z.B. auch nur quer zur Längsrichtung 7, um ein Abheben der Bauteile 2, 3 voneinander zu verhindern.

In der in den Fig. 1, 2 und 4 gezeigten Ausführungsform ist zur Verbindung der Beschläge 4, 5 jeder Beschlag 4, 5 auf seiner dem Eintauchabschnitt 14 abgewandten Seite 15 bzw. 17 mit Rastmitteln zur Verrastung mit dazu komplementären Rastmitteln des jeweils anderen Beschlags ausgestattet. Im gezeigten Beispiel sind die Rastmittel federnde Rasthaken 27, 28 am Beschlag 5, die in eine hinterschnittene Ausnehmung 29 des anderen Beschlags 4 eingreifen. Optional kann ein Steg 30 (Fig. 4) in der Ausnehmung 29, welcher zwischen die eintretenden Rasthaken 27, 28 eingreift, die Rasthaken 27, 28 in der verbundenen Stellung (Fig. 4) gegenüber einem unbeabsichtigten Ausfedern aus den Hinterschneidungen der Ausnehmung 29 blockieren.

Es versteht sich, dass auch jede andere Gestaltung von Rasthaken, Schnapphaken, Federelementen usw. zur gegenseitigen Verrastung der Beschläge 4, 5 verwendet werden kann.

Darüber hinaus können die Beschläge 4, 5 auch mit Gleitführungen zum Erleichtern des Verbindens normal zur Längsrichtung 7 versehen werden. Im gezeigten Beispiel ist dazu der eine Beschlag 5 auf seiner dem Abschnitt 14 abgewandten Seite 17 mit einer oder mehreren auskragenden Laschen 35 versehen, welche in dazu komplementäre, schlitzförmige Taschen 36 des anderen Beschlags 4 gleitend eingreifen können. Dies führt die Beschläge 4, 5 beim Verbinden in Richtung normal zu den Bauteiloberseiten 11 und gewährleistet ein korrektes Verrasten ihrer Rastmittel, hier der Rasthaken 27, 28 in der Ausnehmung 29.

Die Erfindung ist nicht auf die dargestellten Ausführungsformen beschränkt, sondern umfasst alle Varianten, Modifikationen und deren Kombinationen, die in den Rahmen der angeschlossenen Ansprüche fallen.

## Patentansprüche

1. Beschlag für einen Bauteil (2, 3), insbesondere Holzbauteil, der eine Nut (6) mit in Längsrichtung (7) der Nut (6) kreisbogenförmig konkavem Nutgrund (8) und kreissegmentförmigen Nutflanken (9, 10) hat, welcher Beschlag (4, 5) einen Abschnitt (14) mit in Längsrichtung (7) kreisbogenförmig konvexer Stirnseite (18) und zwei parallelen Lateralseiten (19, 20) zum Eintauchen in die Nut (6) hat, wobei jede Lateralseite (19, 20) mit zumindest einer konzentrisch zur Stirnseite (18) kreisbogenförmigen, seitlich abstehenden Schneidkante (21, 21') versehen ist, mithilfe welcher der Beschlag (4, 5) in einer kreisbogenförmigen Bewegung in die Nut (6) von deren einem Ende her eingeschoben werden kann, und wobei der Beschlag (4, 5) ferner dafür ausgebildet ist, an seiner dem genannten Abschnitt (14) abgewandten Seite (15, 17) mit einem zweiten Beschlag (5, 4) lösbar oder unlösbar verbunden zu werden, **dadurch gekennzeichnet, dass** die Stirnseite (18) mit zumindest einer in Längsrichtung (7) kreisbogenförmig verlaufenden Schneidrippe (24) versehen ist.

2. Beschlag nach Anspruch 1, **dadurch gekennzeichnet, dass** die Schneidrippe (24) dreieckförmigen Querschnitt hat und in Längsrichtung (7) gesehen an ihren Enden (25, 26) gegenüber der Stirnseite (18) abgeschrägt ist.

3. Beschlag nach Anspruch 1 oder 2, **dadurch gekennzeichnet, dass** die Schneidrippe (24) in Längsrichtung (7) gesehen kürzer als die Stirnseite (18) ist und mittig auf der Stirnseite (18) liegt.

4. Beschlag nach einem der Ansprüche 1 bis 3, **dadurch gekennzeichnet, dass** die Schneidrippe (24) quer zur Längsrichtung (7) gesehen mittig auf der Stirnseite (18) liegt.

5. Beschlag nach einem der Ansprüche 1 bis 3, **dadurch gekennzeichnet, dass** die Stirnseite (18) mit zwei parallelen, quer zur Längsrichtung (7) gesehen symmetrisch außermittig liegenden Schneidrippen (24) versehen ist.

6. Beschlag nach einem der Ansprüche 1 bis 5, **dadurch gekennzeichnet, dass** die Schneidkanten (21) jeweils einen Querschnitt in Form eines Sägezahns haben, dessen stirnseitenabgewandte Sägezahnseite (22) normal zur jeweiligen Lateralseite (19, 20) liegt.

7. Beschlag nach einem der Ansprüche 1 bis 5 zum Eintauchen in eine Nut (6), deren Nutflanken (9, 10) jeweils nahe dem Nutgrund (8) hinterschnitten sind, **dadurch gekennzeichnet, dass** die Schneidkanten (21) jeweils einen Querschnitt in Form eines Rechtecks mit seitlich angesetztem Dreieck haben.

8. Beschlag nach einem der Ansprüche 1 bis 7, **dadurch gekennzeichnet, dass** der Beschlag (5) auf seiner dem genannten Abschnitt (14) abgewandten Seite (17) mit zumindest einer auskragenden Lasche (35) zum Einführen in eine Tasche (36) eines anderen Beschlags (4) ausgestattet ist.

9. Beschlag nach einem der Ansprüche 1 bis 7, **dadurch gekennzeichnet, dass** der Beschlag (4) auf seiner dem genannten Abschnitt (14) abgewandten Seite (15) mit zumindest einer schlitzförmigen Tasche (36) zur gleitführenden Aufnahme einer vorkragenden Lasche (35) eines anderen Beschlags (5) ausgestattet ist.

10. Beschlag nach einem der Ansprüche 1 bis 9, **dadurch gekennzeichnet, dass** der Beschlag (4, 5) auf seiner dem genannten Abschnitt (14) abgewandten Seite (15, 17) mit Rastmitteln (27 - 29) zur Verrastung mit einem dazu komplementären anderen Beschlag (5, 4) ausgestattet ist.

11. Beschlag nach Anspruch 10, **dadurch gekennzeichnet, dass** die Rastmittel federnde Rasthaken (27, 28) für den Eingriff in eine hinterschnittene Ausnehmung (29) des anderen Beschlags (4) sind.

12. Beschlag nach Anspruch 10, **dadurch gekennzeichnet, dass** die Rastmittel eine hinterschnittene Ausnehmung (29) für den Eingriff federnder Rasthaken (27, 28) des anderen Beschlags (5) sind.

13. Beschlag nach Anspruch 12, **dadurch gekennzeichnet, dass** in der Ausnehmung (29) ein Steg (30) für den Eintritt zwischen zwei Rasthaken (27, 28) des anderen Beschlags (5) vorgesehen ist.

14. Verbinder für zwei Bauteile, umfassend zwei Beschläge (4, 5) nach einem der Ansprüche 1 bis 13, welche dafür ausgebildet sind, miteinander verschraubt, verhakt oder verrastet zu werden.

## Claims

1. A fitting for a component (2, 3), in particular a wooden component, which has a groove (6) with a groove base (8), which is concave in the form of a circular arc in longitudinal direction (7) of the groove (6), and groove flanks (9, 10) in the form of circular segments, which fitting (4, 5) has a section (14) with a face side (18), which is convex in the form of a circular arc in longitudinal direction (7), and two parallel lateral sides (19, 20) for insertion into the groove (6), wherein each lateral side (19, 20) is provided with at least one laterally protruding cutting edge (21, 21') in the form of a circular arc concentric to the face side (18), by means of which the fitting (4, 5) can be slid into the groove (6) from its one end in a circular arc-shaped movement, and wherein the fitting (4, 5) is further configured to be detachably or non-detachably connected with a second fitting (5, 4) via its side (15, 17) facing away from said section (14), **characterized in that** the face side (18) is provided with at least one cutting rib (24) extending in the form of a circular arc in longitudinal direction (7).

2. The fitting according to claim 1, **characterized in that** the cutting rib (24) has a triangular cross-section and, when viewed in longitudinal direction (7), is beveled at its ends (25, 26) with respect to the face side (18).

3. The fitting according to claim 1 or 2, **characterized in that** the cutting rib (24), when viewed in longitudinal direction (7), is shorter than the face side (18) and is centered on the face side (18).

4. The fitting according to any one of claims 1 to 3, **characterized in that** the cutting rib (24) is centered on the face side (18) when viewed perpendicularly to the longitudinal direction (7).

5. The fitting according to any one of claims 1 to 3, **characterized in that** the face side (18) is provided with two parallel cutting ribs (24) which are symmetrically eccentric when viewed perpendicularly to the longitudinal direction (7).

6. The fitting according to any one of claims 1 to 5, **characterized in that** the cutting edges (21) each have a cross-section in the form of a saw tooth, the saw tooth side (22) of which facing away from the face side (18) is perpendicular to the respective lateral side (19, 20).

7. The fitting according to any one of claims 1 to 5 for inserting into a groove (6), the groove flanks (9, 10) of which are each undercut close to the groove base (8), **characterized in that** the cutting edges (21) each have a cross-section in the form of a rectangle with a laterally attached triangle.

8. The fitting according to any one of claims 1 to 7, **characterized in that** the fitting (5) is provided with at least one projecting lug (35) on its side (17) facing away from said section (14) for inserting into a pocket (36) of another fitting (4).

9. The fitting according to any one of claims 1 to 7, **characterized in that** the fitting (4) is provided with at least one slit-shaped pocket (36) on its side (15) facing away from said section (14) for the slide-guided reception of a projecting tab (35) of another fitting (5).

10. The fitting according to any one of claims 1 to 9, **characterized in that** the fitting (4, 5) is provided with latching means (27 - 29) on its side (15, 17) facing away from said section (14) for latching with another fitting (5, 4) complementary thereto.

11. The fitting according to claim 10, **characterized in that** the latching means are elastic latching hooks (27, 28) for engagement in an undercut recess (29) of the other fitting (4).

12. The fitting according to claim 10, **characterized in that** the latching means are an undercut recess (29) for the engagement of elastic latching hooks (27, 28) of the other fitting (5).

13. The fitting according to claim 12, **characterized in that** a bar (30) is provided in the recess (29) for insertion between two latching hooks (27, 28) of the other fitting (5).

14. A connector for two components, comprising two fittings (4, 5) according to any one of claims 1 to 13, which are configured to be screwed, hooked or latched together.

## Revendications

1. Ferrure pour un composant (2, 3), notamment un composant en bois qui possède une rainure (6) avec une base de rainure (8) concave en forme d'arc de cercle dans la direction longitudinale (7) de la rainure (6) et des flancs de rainure (9, 10) en forme de segments circulaires, laquelle ferrure (4, 5) possède une section (14) avec une face avant (18) convexe en forme d'arc de cercle dans la direction longitudinale (7) et deux faces latérales (19, 20) parallèles pour l'insertion dans la rainure (6), où chaque face latérale (19, 20) est munie d'au moins un bord de coupe (21, 21') en forme d'arc de cercle concentrique à la face avant (18) faisant saillie latéralement, à l'aide de lequel la ferrure (4, 5) peut être introduite dans la rainure (6) par l'une de ses extrémités dans un mouvement en forme d'arc de cercle, et où la ferrure (4, 5) est en outre conçue pour être reliée de manière amovible ou non-amovible avec une deuxième ferrure (5, 4) au niveau de la face (15, 17) opposée à ladite section (14), **caractérisée en ce que** la face avant (18) est munie d'au moins une nervure de coupe (24) s'étendant en forme d'arc de cercle dans la direction longitudinale (7).

2. Ferrure selon la revendication 1, **caractérisée en ce que** la nervure de coupe (24) possède une section transversale de forme triangulaire et, vu en direction longitudinale (7), est biseautée à ses extrémités (25, 26) par rapport à la face avant (18).

3. Ferrure selon la revendication 1 ou 2, **caractérisée en ce que** la nervure de coupe (24) est plus courte que la face avant (18), vu en direction longitudinale (7), et se situe au centre sur la face avant (18).

4. Ferrure selon l'une des revendications 1 à 3, **caractérisée en ce que** la nervure de coupe (24) se situe au centre sur la face avant (18), vu perpendiculairement par rapport à la direction longitudinale (7).

5. Ferrure selon l'une des revendications 1 à 3, **caractérisée en ce que** la face avant (18) est munie de deux nervures de coupe (24) parallèles se situant symétriquement excentrées, vu perpendiculairement par rapport à la direction longitudinale (7) .

6. Ferrure selon l'une des revendications 1 à 5, **caractérisée en ce que** les bords de coupe (21) possèdent respectivement une section transversale en forme de dent de scie dont la face de dent de scie (22) opposée à la face avant est perpendiculaire à la face latérale (19, 20) respective.

7. Ferrure selon l'une des revendications 1 à 5, pour l'insertion dans une rainure (6) dont les flancs de rainure (9, 10) sont respectivement contre-dépouillé près de la base de rainure (8), **caractérisée en ce que** les bords de coupe (21) ont respectivement une section transversale en forme de rectangle avec un triangle aligné latéralement.

8. Ferrure selon l'une des revendications 1 à 7, **caractérisée en ce que** la ferrure (5) est équipée sur sa face (17) opposée à ladite section (14) avec au moins une patte (35) en saillie pour l'introduction dans une poche (36) d'une autre ferrure (4).

9. Ferrure selon l'une des revendications 1 à 7, **caractérisée en ce que** la ferrure (4) est équipée sur sa face (15) opposée à ladite section (14) avec au moins une poche (36) en forme de fente pour le logement coulissant d'une patte (35) en saillie d'une autre ferrure (5).

10. Ferrure selon l'une des revendications 1 à 9, **caractérisée en ce que** la ferrure (4, 5) est équipée sur sa face (15, 17) opposée à ladite section (14) de moyens de verrouillage (27 - 29) pour le verrouillage avec une autre ferrure (5, 4) complémentaire à celle-ci.

11. Ferrure selon la revendication 10, **caractérisée en ce que** les moyens de verrouillage sont des crochets de verrouillage (27, 28) à ressort pour l'introduction dans un évidement (29) contre-dépouillé de l'autre ferrure (4).

12. Ferrure selon la revendication 10, **caractérisée en ce que** les moyens de verrouillage constituent un évidement (29) contre-dépouillé pour l'introduction de crochets de verrouillage (27, 28) à ressort de l'autre ferrure (5).

13. Ferrure selon la revendication 12, **caractérisée en ce qu'**une tige (30) est prévue dans l'évidement (29) pour l'insertion entre deux crochets de verrouillage (27, 28) de l'autre ferrure (5).

14. Connecteur pour deux composants comprenant deux ferrures (4, 5) selon l'une des revendications 1 à 13, lesquelles sont conçues pour être vissées, crochetées ou verrouillées ensemble.
